(19)

Europäisches Patentamt
European Patent Office
Office européen des brevets

(11)     **EP 1 840 928 B1**

(12)          **EUROPEAN PATENT SPECIFICATION**

(45) Date of publication and mention
of the grant of the patent:
**13.12.2017 Bulletin 2017/50**

(21) Application number: **04802551.4**

(22) Date of filing: **28.12.2004**

(51) Int Cl.:
*H04B 1/707* [(2011.01)]          *H04B 1/7105* [(2011.01)]
*H04B 1/7115* [(2011.01)]          *H04B 1/7117* [(2011.01)]
*H04B 7/02* [(2017.01)]

(86) International application number:
**PCT/CN2004/001539**

(87) International publication number:
**WO 2006/069474 (06.07.2006 Gazette 2006/27)**

(54) **MULTIPATH DIVERSITY RECEIVING EQUIPMENT OF CDMA SYSTEM**

MEHRWEGEDIVERSITYEMPFANGSEINRICHTUNG FÜR CDMA-SYSTEM

APPAREIL DE RECEPTION DE DIVERSITE MULTIVOIES D'UN SYSTEME AMRC

(84) Designated Contracting States:
**AT BE BG CH CY CZ DE DK EE ES FI FR GB GR
HU IE IS IT LI LT LU MC NL PL PT RO SE SI SK TR**

(43) Date of publication of application:
**03.10.2007 Bulletin 2007/40**

(73) Proprietors:
• **ZTE Corporation
Guangdong 518057 (CN)**
• **Sanechips Technology Co., Ltd.
Shenzhen, Guangdong 518055 (CN)**

(72) Inventors:
• **CHEN, Yuefeng,
ZTE Plaza, Keji Road South
Shenzhen,
Guangdong 518057 (CN)**
• **ZHONG, Xinchao,
ZTE Plaza, Keji Road South
Shenzhen,
Guangdong 518057 (CN)**
• **SUN, Shaogang,
ZTE Plaza, Keji Road South
Shenzhen,
Guangdong 518057 (CN)**

• **LIU, Xinyang,
ZTE Plaza, Keji Road South
Shenzhen,
Guangdong 518057 (CN)**

(74) Representative: **Persson, Albin
Hansson Thyresson Patentbyrå
Box 73
201 20 Malmö (SE)**

(56) References cited:
**EP-A- 1 128 565          CN-A- 1 458 756
CN-A- 1 471 252          JP-A- 2001 257 628
US-A1- 2004 136 446**

• **HARJU L ET AL: "Flexible implementation of a
WCDMA rake receiver" SIGNAL PROCESSING
SYSTEMS, 2002. (SIPS '02). IEEE WORKSHOP ON
OCT. 16-18, 2002, PISCATAWAY, NJ, USA,IEEE,
16 October 2002 (2002-10-16), pages 177-182,
XP010616597 ISBN: 978-0-7803-7587-1**

**Description**

TECHNICAL FIELD

The present invention relates to the receiver techniques in Code Division Multiple Access (CDMA) system, Wideband Code Division Multiple Access (WCDMA) system, and Time Division Synchronous CDMA (TDS-CDMA) system, and particularly to the base band multipath diversity receiving equipment of broadband CDMA system.

BACKGROUND ART

In CDMA system, multipath fading channels are formed because signals arrive at the receiving end in different propagation paths with different propagation delays; at the same time, the low correlation among different phase errors of signal code sequences causes that the multipath delay components over a chip period are irrelative, which performs detachable paths in the model, so the multipath diversity receiving equipment, i.e. RAKE receiver, is usually adopted in CDMA system for receiving signals.

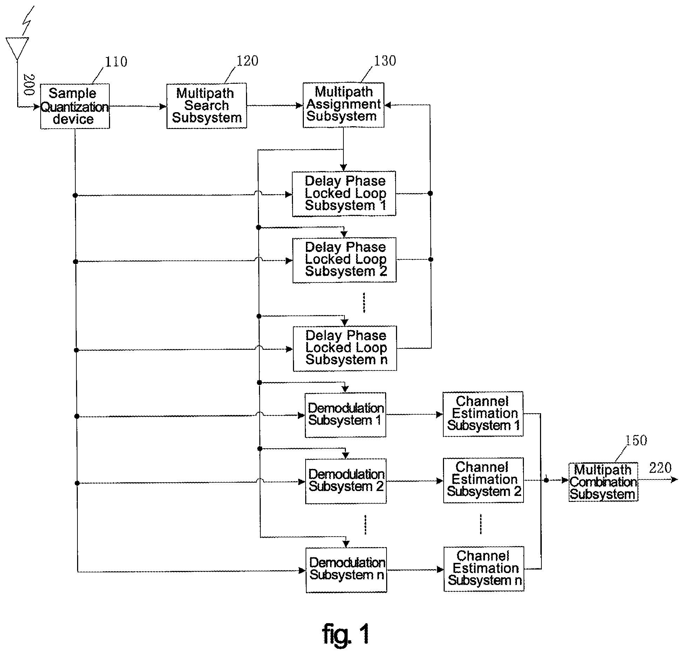

The RAKE receiver implements the receipt of user signals through combining the multipath after the descrambling and the despreading the multipath with different phases of certain user separately. The principle of the RAKE receiver is as shown in figure 1, comprising a sample quantization device 110, a multipath search subsystem 120, a multipath assignment subsystem 130, $n$ delay phase locked loop subsystems, n demodulation subsystems, n channel estimation subsystems and multipath combination subsystem 150. The sample signals obtained by sampling and quantizing 110 the signal 200 sent by the mobile user device are sent to the multipath search subsystem 120 and the multipath assignment subsystem 130 for phase search of user multipath, and then the corresponding multipath phases are assigned to the demodulation subsystem 1, the demodulation subsystem 2, ......, the demodulation subsystem n, and the delay phase locked loop subsystem 1, the delay phase locked loop subsystem 2, ......, the delay phase locked loop subsystem n. Each demodulation subsystem and delay phase locked loop subsystem are responded to a multipath phase. Based on the different multipath phases, sample signals output by the sample quantization device 110 are descrambled and despreaded by each demodulation subsystem, and symbols signals obtained by descrambling and despreading are respectively sent to the channel estimation subsystem 1, the channel estimation subsystem 2, ......, the channel estimation subsystem n for estimating the channel, and symbol signals after the signal are sent to the multipath combination subsystem 150 for multipath combination, then the combined signal 220 is sent to the following subsystem for processing. Each delay phase locked loop subsystem carries on the descrambling, the dispreading and the energy summation for the sample signals output by the sample quantization device 110 according to the corresponding multipath phases and multipath phases with forward-and-back 1/2 chip shift, and judges whether the multipath phase corresponding to the delay phase locked loop subsystem keeps fixed, or slips forward or back according to the difference between the energy of the corresponding multipath phase and the energy of the multipath phase with forward-and-back 1/2 chip shift, and sends the result to the multipath distribution subsystem 130 as the basis of distributing the multipath phases. In such a way, the whole receipt processing of the RAKE receiver is finished.

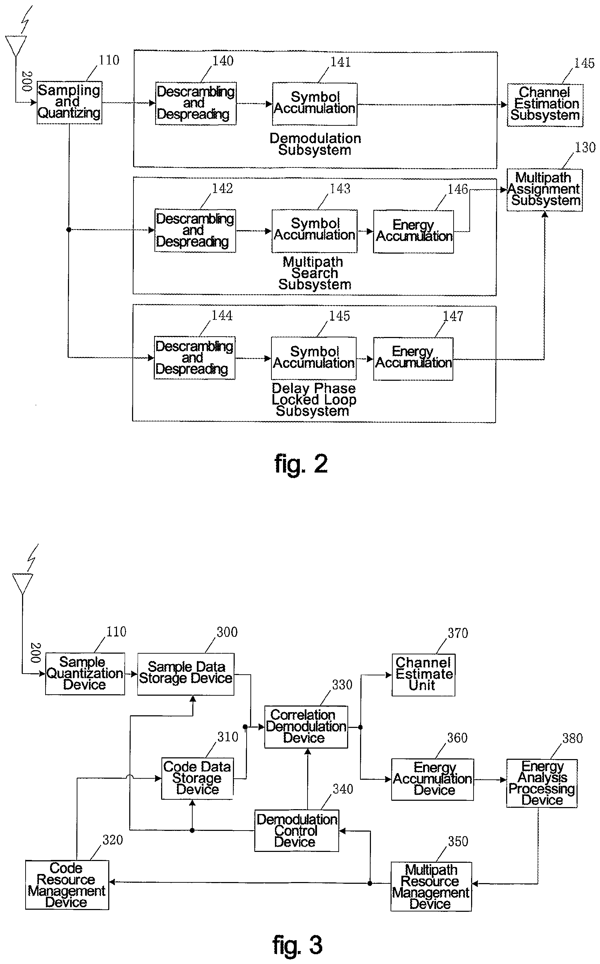

In the traditional RAKE receiver, the multipath search subsystem, the demodulation subsystem and the delay phase locked loop subsystem have the structures independent of each other, which are shown as in figure 2. For the demodulation subsystem, after the sample signals obtained by sampling and quantizing 110 the signal 200 sent by the mobile device are descrambled and despread 140 and symbol accumulated 141, the result is sent to the channel estimation subsystem 149. For the multipath search subsystem, after sample signals are descrambled and despread 142, symbol accumulated 143, and energy accumulated 146, the result is sent to the multipath assignment subsystem 130. For the delay phase locked loop subsystem, after sample signals are descrambled and despread 144, symbol accumulated 145, and energy accumulated 147, the result is sent to the multipath assignment subsystem 130.

As above described, the multipath search subsystem, the demodulation subsystem and the delay phase locked loop subsystem in the traditional RAKE receiver adopt the devices independent of each other, wherein each demodulation subsystem and each delay phase locked loop subsystem use a set of corresponding devices, which causes a bigger waste in hardware resource. In order to reduce the hardware resource and realize Time Division Multiplexing (TDM) multipath parallel demodulation, the method of buffering sample signals and code information was brought forward, and at the same time the multipath phase corresponding to the delay phase locked loop and its shifted multipath phase are seen as the multipath to be parallel demodulated together. However, the method only combined the demodulation subsystem and the delay phase locked loop subsystem without the multipath search subsystem, while the structure of the delay phase locked loop subsystem is similar to that of the multipath search subsystem, thereby the hardware structure was not truly simplified with some repeats, which also caused the waste in hardware resource.

EP 1128565 A2 discloses a correlator co-processor for CDMA rake receiver. The correlator co-processor is a programmable, highly flexible, vector-based correlation machine capable of performing CDMA base-station and handset RAKE receiver operations such as finger spreading and search, among other things, for multiple channels, regardless of the particular wireless communication protocol.

Additionally, the traditional RAKE receiver is a signal processing equipment of 1-dimension operation for sample signals and code words according to the features of RAKE receiver. But with the development of the CDMA system, specially for the problem of intersymbol interference, the method of multi-user combination detection is needed to be introduced to reduce the intersymbol interference among users to improve the performance and the capability of the system, and the combination detection is realized by performing n-dimension matrix operation for the sample signals input by the antenna and the code information. Therefore, the traditional RAKE receiver can not support the n-dimension matrix operation function needed by combination detection, needing an individual device to realize the n-dimension matrix operation needed by the combination detection, which causes the addition of the hardware resource, and the increase of the cost of the realization of the hardware device.

SUMMARY OF THE INVENTION

The purpose of the present invention is to provide a multipath diversity receiving equipment, which can realize the combination of the multipath search, multipath demodulation and delay phase locked loop, and the function of matrix processing of user combination detection to simplify the hardware structure and reduce the hardware resource.

The above problem is solved by a multipath diversity receiving equipment according to claim 1.

The multipath diversity receiving equipment of the invention, comprises: a sample quantization device, a sample data storage device , a code data storage device, a multipath resource management device, a code resource management device, a demodulation control device, a correlation demodulation device, a channel estimation unit, an energy accumulation device, and an energy analysis processing device;

said sample quantization device being for sampling and quantizing the receiving signals, outputting them to said sample data storage device;

said sample data storage device being for storing all the sample data, and outputting them to said correlation demodulation device under the control of said demodulation control device;

said code data storage device being for storing all the code data, and outputting them to said correlation demodulation device under the control of said demodulation control device;

said multipath resource management device being for receiving the result output by said energy analysis processing device to generate an aggregation of multipath demodulation, sending the multipath phase information to said demodulation control device, and sending the corresponding code information to said code resource management device;

said code resource management device being for generating the code word data according to the code information sent by said multipath resource management device, and outputting them to said code data storage device;

said demodulation control device being for generating the read addresses of said sample data storage device and said code data storage device according to the multipath phase information output by said multipath resource management device, and controlling the demodulation operation of said correlation demodulation device;

said correlation demodulation device being for completing the operation of all the multipath demodulation according to the control of said demodulation control device, outputting the result of multipath demodulation to said channel estimation unit, and outputting the result of multipath demodulation belonging to the multipath search and delay phase locked loop to said energy accumulation device;

said channel estimation unit being for estimating the multipath demodulation data output by said correlation demodulation device;

said energy accumulation device being for accumulating the energy of the multipath data output by said correlation demodulation device, and outputting them to said energy analysis processing device;

said energy analysis processing device being for selecting the multipath with the largest energy from the multipath belonging to the multipath search, and judging whether the phase has slipped and the direction of the slip according to the multipath phase corresponding to the delay phase locked loop and sending to said multipath resource management device.

Further , contents stored in said sample data storage device are $\begin{bmatrix} \begin{bmatrix} d_{0,0}, d_{0,1}, \cdots \end{bmatrix} \\ \cdots\cdots \\ \begin{bmatrix} d_{n-1,0}, d_{n-1,1}, \cdots \end{bmatrix} \end{bmatrix}$, $(d = \alpha + j\beta)$, wherein

each row is corresponded to an input sequence of antennae, i.e. $n$ represents the number of the antennae; each data is corresponded to a sample data.

Further, contents stored in said code data storage device are $\begin{bmatrix} \begin{bmatrix} c_{0,0}, c_{0,1}, \cdots \end{bmatrix} \\ \cdots\cdots \\ \begin{bmatrix} c_{m-1,0}, c_{m-1,1}, \cdots \end{bmatrix} \end{bmatrix}$, $(c = \varepsilon + j\phi)$, wherein, each

row is corresponded to a code word sequence of a user (channel), i.e. $m$ represents the number of users (channels); each data is corresponded to a code word data.

Further, said correlation demodulation device comprises a module for realizing $m \times n$ correlation operation matrix and a module for realizing $m \times N$ accumulation matrix, which are sequential linked, wherein said module for realizing $m \times n$ correlation operation matrix is used to complete correlation demodulation operation between $n$ sample data of each multipath and its corresponding $n$ code word data for $m$ multipaths; said module for realizing $m \times N$ accumulation matrix is used to finish accumulation process of $m$ results of parallel correlation operation of multipath phase for N times; and the number of multipaths that each row of the matrix can support is $N$, wherein $N$ is the column number of accumulation matrix.

Said module for realizing $m \times n$ correlation operation matrix completes matrix operations between $m \times n$ matrixes, at the same time said module for realizing $m \times N$ accumulation matrix realizes the data buffer function of the intermediate result of the matrix operation.

The present invention also provides a mobile terminal of CDMA system, comprising the multipath diversity receiving equipment mentioned above.

A mobile terminal of WCDMA system, comprising the multipath diversity receiving equipment mentioned above.

A mobile terminal of TDS-CDMA system, comprising the multipath diversity receiving equipment mentioned above.

The equipment of the present invention can realize the combination of the multipath search, the multipath demodulation and the delay phase locked loop, and at the same time with the design of the demodulation control unit , not only realize the parallel demodulation of multiple multipath by controlling the correlation demodulation device, but also realize the operation of the N-dimension matrix, so as to provide the function extension of the combination detection. The equipment of present invention is not only suitable for the Wideband Code Division Multiple Access (WCDMA) system, but also only suitable for the Time Division Synchronous CDMA (TDS-CDMA) system; furthermore, also suitable for the mobile terminal of the CDMA system, WCDM system and TDS-CDMA system.

DESCRIPTION OF THE DRAWINGS

Figure 1 is a schematic diagram of the RAKE receiver of the prior art;
Figure 2 is a schematic diagram of the multipath demodulation subsystem, the multipath searching subsystem and the delay locked loop subsystem in the RAKE receiver of the prior art;
Figure 3 is a schematic diagram of multipath diversity receiving equipment in accordance with the present invention;
Figure 4 is a schematic view of the correlation demodulation device of Fig.3;
Figure 5 is schematic diagram of the demodulation control device of Fig.3;
Figure 6 is schematic view of the multipath phase storage;
Figure 7 is schematic diagram of the multipath resource management device of Fig.3.

PREFERRED EMBODIMENT OF THE INVENTION

The technical solution of the present invention will be described further in detail with reference to the accompanying drawings.

Figures 1 and 2 present the schematic diagram of the RAKE receiver of the prior art, which have been explained in Background, not giving any unnecessary details here.

The base principle of the present invention is as follows: the continuous demodulation for multiple offsets of search window when performing multipath search is regarded as the demodulation for the multiple multipaths with phase shift of 1/2 chip and continuous phase; the delay phase locked loop is regarded as the demodulation of three multipaths with phase shift of 1/2 chip. In such a way, the multipath demodulation, multipath search and delay phase locked loop are all seen as the multipath demodulation, only the energy accumulation is needed after the demodulation for multipath phase of the multipath search and delay phase locked loop. Based on above principle, the multipath demodulation, multipath search and delay phase locked loop can be combined through the hardware, and at the same time the demodulation processing of the multipath demodulation, multipath search and delay phase locked loop are seen as an aggregation of the demodulation of multiple multipaths to get rid of the repetition parts of demodulation processing of the multipath search and delay phase locked loop.

In the CDMA system, provided that the number of the samples of each chip of system input data is $2^k$, and input sequence is:

$\{d_{0,0},\cdots d_{0,2k-1},\ d_{1,0},\ldots,d_{1,2k-1},\cdots\},(d_{m,n} = \alpha_{m,m} + j\beta_{m,n})$; and the sequence of the code words of the user is:

$\{c_0,c_1,c_2,\ldots\ldots\},(c_k = \varepsilon_k + j\phi_k)$. Provided that the multipath phase of one multipath is $t$, and $l = \left\lfloor \dfrac{t}{2^k} \right\rfloor$, $s = t - 2^k l (s \le 2^k$

- 1) then the first reading data are: $\{d_{l,s},\ d_{l+1,s},\ldots\ldots d_{2^k+l-1,s}\},(c_k = \varepsilon_k + j\phi_k)$ ; in such a way, the demodulation result of $p$ data of each multipath is:

$$s_f = \left\{d_{l,s}, d_{l+1,s}, \cdots\cdots d_{p+l-1,s}\right\} \cdot \left\{c_0, c_1, \cdots\cdots c_{p-1}\right\}^T$$

**(1)**

From above, the demodulation operation of a multipath can be seen as the operation of 1-dimension matrix of the antenna data and 1-dimension matrix of the code word data, therefore, if the multipath demodulation, multipath search and delay phase locked loop are seen as the demodulation operation for the aggregation of all the multipaths, $m \times n$ matrix can be used to represent $m$ multipaths, and each multipath has $n$ sample data for demodulation operation with $n$ code word data. Then by controlling the demodulation operation, all the multipath demodulations are realized, and at the same time it can be extended as matrix operation used in multiple-user detection.

The structure of the multipath diversity receiving equipment of CDMA system of the present invention is illustrated in figure 3, including a sample quantization device 110, a sample data storage device 300, a code data storage device 310, a multipath resource management device 350, a code resource management device 320, a demodulation control device 340, a correlation demodulation device 330, a channel estimation unit 370, an energy accumulation device 360 and an energy analysis processing device 380.

After the signal 200 received by the receiving antenna passes through the sample quantization device 110, the sample signal is output to the sample data storage device 300. The multipath resource management device 350 provides the code information to the code resource management device 320, and the code word data are produced in the code resource management device 320 and stored in the code data storage device 310; at the same time the multipath resource management device 350 provides the multipath information to the demodulation control device 340. The demodulation control device 340 controls to read the sample data and the code word data from the sample data storage device 300 and the code data storage device 310, and outputs them to the correlation demodulation device 330 for processing, and the correlation demodulation device 330, based on the information output by the demodulation control device 340, outputs the result of demodulation to the channel estimation unit 370 for channel estimation, then the demodulation function is completed; or outputs the result to the energy accumulation device 360 for energy accumulation, and then outputs the accumulation result to the energy analysis processing device 380 for further processing to complete the multipath search function and the delay phase locked loop function, and the result from the energy analysis processing device 380 is feedbacked to the multipath resource management device 350, then the whole receiving processing of the RAKE receiver is completed.

In the CDMA system, for a base station, the samples obtained by sampling and quantizing the signals received by the receiving antenna includes all the information of users, and for mobile holding device, it includes the information of all the channels sent by the base station.

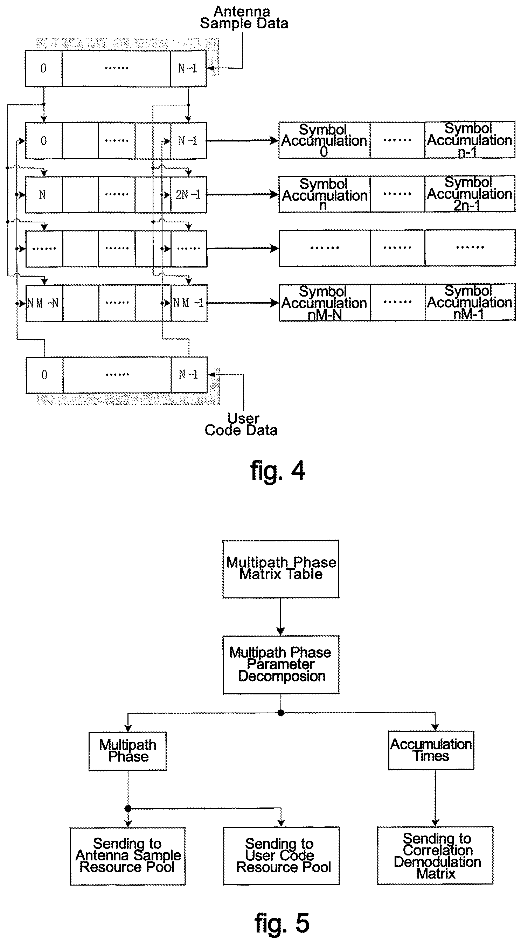

The following is the description of each component of the present invention with reference to the figures 4 - 7.

In the equipment of the present invention, the sample data storage device 300 is mainly used to store all the antenna data for multipath demodulation, the storage contents of which are $\begin{bmatrix} \left[d_{0,0}, d_{0,1}, \cdots\right] \\ \cdots\cdots \\ \left[d_{n-1,0}, d_{n-1,1}, \cdots\right] \end{bmatrix}$, $(d = \alpha + j\beta)$, wherein,

each row is corresponded to the input sequence of an antenna, i.e. n represents the number of the antennas; each data is corresponded to a sample data. For a base station system, N 1-dimension matrixes are stored in the sample data storage device 300, i.e. $n = N$; for a handset system, 1 1-dimension matrix is stored in the sample data storage device 300, i.e., $n = 1$.

All the code word data needed by multipath demodulation are stored in the code data storage device 310, the storage contents of which are $\begin{bmatrix} \begin{bmatrix} c_{0,0}, c_{0,1}, \cdots \end{bmatrix} \\ \cdots \cdots \\ \begin{bmatrix} c_{m-1,0}, c_{m-1,1}, \cdots \end{bmatrix} \end{bmatrix}$, $(c = \varepsilon + j\phi)$, wherein, each row is corresponded to the code word sequence of a user (channel), i.e. $m$ represents the number of users (channels); each data is corresponded to a code word data. For a base station system and a handset system, M 1-dimension matrixes are stored in the code data storage device 310, corresponding to $M$ users/channels, i.e. $m = M$.

The main functions of the code resource management device 320 are: collecting the code information of users (channels) corresponding to each multipath output by the multipath resource management device 350, and generating the corresponding scrambling and channel code according to this information, then operating the scrambling and channel code to get the final code word data of users (channels), and outputting them to the code data storage device 310.

The correlation demodulation device 330 is controlled by the demodulation control device 340, and implements the matrix operation for the data from the sample data storage device 300 and the code data storage device 310, and accumulates to get a complete symbol data to realize all the multipath demodulation operations. If the result of demodulation operation is the complete symbol data of the multipath demodulation of the multipath search and the delay phase locked loop, it will be output to the energy accumulation device 360; if it is the normal complete symbol data of multipath demodulation, it will be output to the channel estimation unit 370.

Figure 4 is a schematic view of the correlation demodulation device 330, including the module for realizing $m \times n$ correlation operation matrix and the module for realizing $m \times N$ accumulation matrix, wherein the module for realizing $m \times n$ correlation operation matrix is used to complete the correlation demodulation operation between n sample data of each multipath and the corresponding n code word data for m multipaths; the module for realizing $m \times N$ accumulation matrix is used to finish the accumulation process of the m results of parallel correlation operation of multipath phase for N times; the number of multipaths that each row matrix can support is $N$; wherein $m$ is the number of the rows of the correlation operation matrix, i.e. the number of multipaths to be parallel processed by the correlation demodulation matrix; $n$ is the number of the columns of the correlation operation matrix, i.e. the length of sample data or code word data for one correlation operation of each multipath of the correlation demodulation matrix.; $N$, the column number of accumulation matrix, is the maximum number of the multipaths supported by each row of the correlation demodulation matrix, which is equal to $n$ multiplying the number of clock periods in 1 chip, presenting that all multipaths have completed an correlation operation of n sample data and n code word data, i.e. a cycle period of a correlation operation processing.

Further, the module for realizing $m \times n$ correlation operation matrix can be m correlation operators of order n. In the Time Division Multiplexing (TDM) mode, in one clock period, the module for realizing $mxn$ correlation operation matrix completes the correlation operation of n antenna sample data of a group of m parallel multipath phases and the corresponding n code word data of users (channels), then sends the result to the module for realizing $m \times N$ accumulation matrix, and the correlation operation result is accumulated with the previous accumulation result of a certain column in the accumulation matrix, and the result is stored in the original position; in next clock period, the module for realizing $m \times n$ correlation operation matrix completes the correlation operation of next group of m parallel multipath phases, and sends the result to the module for realizing $m \times N$ accumulation matrix, and the correlation operation result is accumulated with the previous accumulation result of a certain column in the accumulation matrix, and the result is stored in the original position. In such a way, the correlation operation and accumulation of a group of $m$ multipath phases can be finished in each clock period of a cycle period, and the maximum number of the multipaths supported by each row correlation demodulation matrix that can be performed is up to N, then next cycle period repeats.

In matrix operation of the combination detection, the real matrix operation is processed in the module for realizing $m \times n$ correlation operation matrix, where $m \times n$ correlation operation matrix completes the matrix operation between $m \times n$ matrixes, for which many times of matrix operations are needed, now the corresponding module for realizing $m \times N$ accumulation matrix can work as intermediate data buffer matrix.

The demodulation control device 340 groups and reorganizes the phase offset information of all the multipaths output by the multipath resource management device 350 to generate read addresses of the sample data memory device 300 and the code data memory device 310, and to control the output of the sample data memory device 300 and the code data memory device 310; at the same time, groups and reorganizes the symbol length information of these multipaths and outputs them to the correlation demodulation device 330 to control the module for realizing $m \times N$ accumulation matrix for processing the symbol accumulation. Figure 5 is schematic diagram of the demodulation control device 340. The demodulation control device 340 receives the multipath phase matrix output by the multipath resource management device 350, and reads one column (corresponding to $m$ multipath phases) of the multipath phase matrix in each clock period, then decomposes parallel $m$ multipath phases read in each clock period, wherein phase offsets of the multipath decomposed are sent to the sample data memory device 300 and the code data storage device 310 for obtaining the antenna sample data and user (channel) code word data needed; the symbol length information of each multipath decomposed is sent to the correlation demodulation device 330 for accumulating the result of the matrix operation to finish the accumulation of the symbol data of each multipath demodulation.

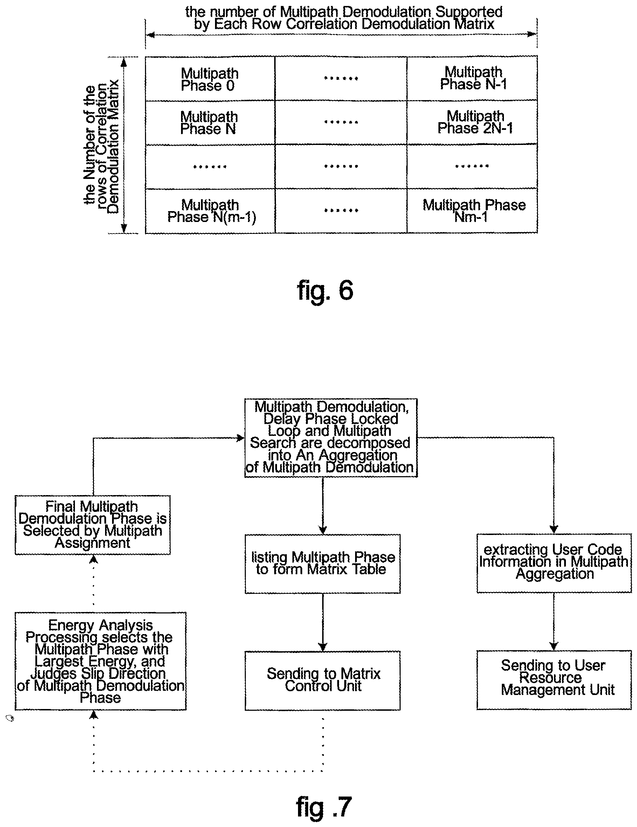

Figure 6 is schematic view of the storage of multipath phases reorganized by the multipath resource management device 350, and all the multipath phases are stored in the multipath phase matrix in matrix form. The size of the multipath phase matrix is related to the number of the rows of the correlation operation matrix in the correlation demodulation device 330 and the number of the multipaths supported by each row, so the multipath phase matrix is a $m\times N$ **2**-dimension matrix. In each clock period, the demodulation control device 340 reads multipath phases of one column of the multipath phase matrix, and outputs them to the correlation demodulation device 330 for processing, so the correlation demodulation device 330 can support $m\times N$ multipath phases.

The main functions of the multipath resource management device 350 are: decomposing all kinds of the multipath search, multipath demodulation, and delay phase locked loop into the aggregation of multipath, then reorganizing all the multipath information, and sorting all the multipath information according to users or channels, and then sending all kinds of information of these multipaths to the demodulation control device 340 and sending the code information of users (channels) corresponding to all the multipaths to the code resource management device 320. Additionally, for the multipath information and multipath slip information reported by the energy analysis processing device 380, the multipath resource management device 350 judges whether it needs to replace the original multipath. Figure 7 is schematic diagram of the multipath resource management device 350. First, the multipath resource management device 350 decomposes the multipath search, multipath demodulation and delay phase locked loop into the multipath demodulation aggregation of all kinds of multipath phases; groups the reorganized multipath phases, according to the number of the rows of correlation operation matrix and the number of multipaths supported by each row, into a $m\times N$ **2**-dimension matrix stored in a $m\times N$ **2**-dimension multipath phase matrix; then outputs the $m\times N$ **2**-dimension multipath phase matrix to the demodulation control device 340. When decomposing the multipath search, multipath demodulation and delay phase locked loop into the multipath demodulation aggregation of all kinds of multipath phases, the multipath resource management device 350 extracts the corresponding user (channel) code information of the multipath search, multipath demodulation and delay phase locked loop, and sends it to the code resource management device 320. The dashed line in the figure represents a processing in which the multipath demodulation aggregation generated by the multipath resource management device 350, through the processing of the correlation demodulation device 330 and the energy accumulation device 360, reports the corresponding information to the energy analysis processing device 380, and a processing in which the energy analysis processing device 380 analyzes and selects the multipath phase with the largest multipath search energy, judges the slip direction of the multipath demodulation phase according to the energy reported by delay phase locked loop, and then reports to the multipath resource management device 350. After receiving these information, the multipath resource management device 350 does the phase judgment and analysis with the existing multipath demodulation phase, and finally generates the multipath phases for next multipath demodulation, which, with the multipath search and delay phase locked loop, is decomposed into the multipath demodulation aggregation of all kinds of multipath phases.

The valid multipath data demodulated by the correlation demodulation device 330 is output to the channel estimation unit 370 to store, and the data is estimated and restored.

The energy accumulation device 360 sums the energy of multipath data related to the multipath search and delay phase locked loop demodulated by the correlation demodulation device 330, and then the summation is sent to the energy analysis processing device 380 for energy judgment and analysis.

The energy analysis processing device 380 judges and analyzes to select the multipath with the largest energy from every multipath of the multipath search according to the energy summation of the multipath data related to the multipath search and delay phase locked loop provided by the energy accumulation device 360, and judges the multipath phase corresponding to delay phase locked loop to make sure whether the phase has slipped and the direction of the slip, and finally sends these information to the multipath resource management device 350.

Additionally, the present invention also provides a mobile terminal for CDMA system, including the multipath diversity receiving equipment above.

Although the multipath diversity receiving equipment of the CDMA system has been described in detail with reference to the exemplary embodiments above, the embodiments above are not exhaustive. People skilled in the art can implement various changes and modifications within the scope of the present invention. Therefore, the present invention is not limited to these embodiments, and the true scope of the invention is indicated by the appended claims of the present invention.

## Claims

1.  A multipath diversity receiving equipment for code division multiple access communications comprising: a sample quantization device (110), a sample data storage device (300), a code data storage device (310), a multipath resource management device (350), a code resource management device (320), a demodulation control device (340), a correlation demodulation device (330), a channel estimation unit (370), an energy accumulation device (360), and an energy analysis processing device (380);

said sample quantization device (110) for sampling and quantizing receiving signals to output to said sample data storage device (300);

said sample data storage device (300) for storing all the sample signals to output to said correlation demodulation device (330) under the control of said demodulation control device (340);

said code data storage device (310) for storing all the code data to output to said correlation demodulation device (330) under the control of said demodulation control device (340);

said multipath resource management device (350) for receiving the result output by said energy analysis processing device (380) to generate an aggregation of multipath demodulation, and sending the multipath phase information to said demodulation control device (340), and sending the corresponding code information to said code resource management device (320);

said code resource management device (320) for generating the code word data according to the code information sent by said multipath resource management device (350) to output to said code data storage device (310);

said demodulation control device (340) for generating the read addresses of said sample data storage device (300) and said code data storage device (310) according to the multipath phase information output by said multipath resource management device (350), and controlling the demodulation operation of said correlation demodulation device (330);

said correlation demodulation device (330) for completing the operation of all the multipath demodulation according to the control of said demodulation control device (340), outputting the result of multipath demodulation to said channel estimation unit (370), and outputting the result of multipath demodulation belonging to the multipath search and delay phase locked loop to said energy accumulation device (360);

said channel estimation unit (370) for estimating the multipath demodulation data output by said correlation demodulation device (330);

said energy accumulation device (360) for performing energy accumulation of the multipath data output by said correlation demodulation device (330), and outputting accumulation result to said energy analysis processing device (380);

said energy analysis processing device (380) for selecting the multipath with a largest energy from the multipaths belonging to the multipath search, and judging whether the phase has slipped and the direction of the slip according to the multipath phase corresponding to the delay phase locked loop, and sending to said multipath resource management device (350), **characterized in that** said correlation demodulation device (330) comprises a module for realizing $m \times n$ correlation operation matrix and a module for realizing $m \times N$ accumulation matrix, which are sequential linked, wherein said module for realizing $m \times n$ correlation operation matrix is used to complete correlation demodulation operation between $n$ sample data of each multipath and its corresponding n code word data for $m$ multipaths in one clock period; said module for realizing $m \times N$ accumulation matrix is used to finish accumulation process of $m$ results of parallel correlation operation of multipath phase for N times; and the number of multipaths that each row of the matrix can support is N, which is equal to n multiplied by the number of clock periods in one chip, wherein $N$ is the column number of accumulation matrix.

2. The multipath diversity receiving equipment of claim 1, **characterized in that** contents stored in said sample data storage device (300) are $\begin{bmatrix} \left[ d_{0,0}, d_{0,1}, \cdots \right] \\ \cdots\cdots \\ \left[ d_{n-1,0}, d_{n-1,1}, \cdots \right] \end{bmatrix}$, $(d = \alpha + j\beta)$, wherein each row is corresponded to an input sequence of antennae, i.e. $n$ represents the number of the antennae; each data is corresponded to a sample data.

3. The multipath diversity receiving equipment of claim 1, **characterized in that** contents stored in said code data storage device (310) are $\begin{bmatrix} \left[ c_{0,0}, c_{0,1}, \cdots \right] \\ \cdots\cdots \\ \left[ c_{m-1,0}, c_{m-1,1}, \cdots \right] \end{bmatrix}$, $(c = \varepsilon + j\phi)$, wherein, each row is corresponded to a code word sequence of a user (channel), i.e. $m$ represents the number of users (channels); each data is corresponded to a code word data.

4. The multipath diversity receiving equipment of claim 1, **characterized in that** said module for realizing $m \times n$ correlation operation matrix completes matrix operations between $m \times n$ matrixs, at the same time said module for realizing $m \times N$ accumulation matrix realizes the data buffer function of the intermediate result of the matrix operation.

5. A mobile terminal of CDMA system, **characterized in** comprising the multipath diversity receiving equipment of any of claims 1-4.

6. A mobile terminal of WCDMA system, **characterized in** comprising the multipath diversity receiving equipment of any of claims 1-4.

7. A mobile terminal of TDS-CDMA system, **characterized in** comprising the multipath diversity receiving equipment of any of claims 1-4.

**Patentansprüche**

1. Mehrwegediversityempfangseinrichtung für die Kommunikation mittels CDMA (Code Division Multiple Access) mit:

einer Abtastquantisierungseinrichtung (110), einer Abtastdatenspeichereinrichtung (300), einer Codedatenspeichereinrichtung (310), einer Mehrwegeressourcenmanagementeinrichtung (350), einer Coderessourcenmanagementeinrichtung (320), einer Demodulationssteuereinrichtung (340), einer Korrelationsdemodulationseinrichtung (330), einer Kanalschätzungseinheit (370), einer Energiespeichereinrichtung (360) und einer Energieanalyseverarbeitungseinrichtung (380);
wobei die Abtastquantisierungseinrichtung (110) zum Abtasten und Quantisieren von Empfangssignalen eingerichtet ist, um diese an die Abtastdatenspeichereinrichtung (300) auszugeben;
wobei die Abtastdatenspeichereinrichtung (300) zum Speichern aller Abtastsignale eingerichtet ist, um diese an die Korrelationsdemodulationseinrichtung (330) unter der Steuerung der Demodulationssteuereinrichtung (340) auszugeben;
wobei die Codedatenspeichereinrichtung (310) zum Speichern aller Codedaten eingerichtet ist, um diese an die Korrelationsdemodulationseinrichtung (330) unter der Steuerung der Demodulationssteuereinrichtung (340) auszugeben;
wobei die Mehrwegeressourcenmanagementeinrichtung (350) zum Empfang des Ergebnisses eingerichtet ist, das durch die Energieanalyseverarbeitungseinrichtung (380) ausgegeben wurde, um eine Aggregation von Mehrwegedemodulation zu erzeugen, und zum Senden der Mehrwegephaseninformationen an die Demodulationssteuereinrichtung (340), und zum Senden der entsprechenden Codeinformationen an die Coderessourcenmanagementeinrichtung (320);
wobei die Coderessourcenmanagementeinrichtung (320) zum Erzeugen der Codewortdaten entsprechend der von der Mehrwegeressourcenmanagementeinrichtung (350) gesendeten Codeinformationen eingerichtet ist, um diese an die Codedatenspeichereinrichtung (310) auszugeben;
wobei die Demodulationssteuereinrichtung (340) zum Erzeugen der Leseadressen der Abtastdatenspeichereinrichtung (300) und der Codedatenspeichereinrichtung (310) entsprechend der Mehrwegephaseninformationen, die von der Mehrwegeressourcenmanagementeinrichtung (350) ausgegeben werden, und zum Steuern des Demodulationsvorgangs der Korrelationsdemodulationseinrichtung (330) eingerichtet ist;
wobei die Korrelationsdemodulationseinrichtung (330) zum Vervollständigen des Vorgangs der gesamten Mehrwegedemodulation gemäß der Steuerung der Demodulationssteuereinrichtung (340), zum Ausgeben des Ergebnisses der Mehrwegedemodulation an die Kanalschätzeinheit (370), und zum Ausgeben des Ergebnisses der Mehrwegedemodulation, die zu der Mehrwegesuche und des Verzögerungsphasenregelkreises (PLL) an die Energiespeichereinrichtung (360) eingerichtet ist;
wobei die Kanalschätzeinheit (370) zum Schätzen der Mehrwegedemodulationsdaten eingerichtet ist, die von der Korrelationsdemodulationseinrichtung (330) ausgegeben werden;
wobei die Energiespeichereinrichtung (360) zur Durchführung der Energiespeicherung der Mehrwegedaten, die durch die Korrelationsdemodulationseinrichtung (330) ausgegeben werden und zum Ausgeben des Speicherergebnisses an die Energieanalyseverarbeitungseinrichtung (380) eingerichtet ist;
wobei die Energieanalyseverarbeitungseinrichtung (380) zum Auswählen des Mehrweges mit einer größten Energie aus den Mehrwegen, die zu der Mehrwegesuche gehören und zum Beurteilen eingerichtet ist, ob die Phase verschoben ist und die Richtung der Verschiebung gemäß der Mehrwegephase verschoben ist, die zu dem Verzögerungsphasenregelkreis gehört, und zum Senden an die Mehrwege-Ressourcen-Management-Einrichtung (350) eingerichtet ist,

**dadurch gekennzeichnet, dass**

die Korrelationsdemodulationseinrichtung (330) ein Modul zur Realisierung einer *m x n* Korrelationsoperationsmatrix und ein Modul zur Realisierung einer *m x N* Akkumulationsmatrix aufweist, die sequentiell miteinander verbunden sind, wobei das Modul zur Realisierung der *m x N* Korrelationsoperationsmatrix verwendet wird, um die Korrelationsdemodulationsoperation zwischen *n* Abtastdaten jedes Mehrweges und seine entsprechenden *n* Codewortdaten für *m* Mehrwege in einer Abtastdauer zu vervollständigen;

wobei das Modul zur Realisierung der *m x N* Akkumulationsmatrix verwendet wird, um den Akkumulationsprozess von *m* Ergebnissen der parallelen Korrelationsoperation der Mehrwegephase *N* mal abzuschließen;

und wobei die Anzahl der Mehrwege, die jede Zeile der Matrix unterstützen kann, *N* beträgt, was gleichzusetzen ist mit *N* multipliziert mit der Anzahl der Abtastzeitdauern in einem Chip, wobei *N* die Spaltenzahl der Akkumulationsmatrix ist.

2. Mehrwegediversityempfangseinrichtung nach Anspruch 1, **dadurch gekennzeichnet, dass** die in der Abtastdatenspeichereinrichtung (300) gespeicherten Inhalte $\begin{bmatrix} \begin{bmatrix} d_{0,0}, d_{0,1}, \cdots \end{bmatrix} \\ \cdots\cdots \\ \begin{bmatrix} d_{n-1,0}, d_{n-1,1}, \cdots \end{bmatrix} \end{bmatrix}$ , ($d = \alpha + j\beta$) sind, wobei jede Zeile eine Eingabesequenz von Antennen entspricht, d. h. *n* steht für die Anzahl der Antennen; jeder Datensatz entspricht einem Abtastdatensatz.

3. Mehrwegediversityempfangseinrichtung nach Anspruch 1, **dadurch gekennzeichnet, dass** die in der Codedatenspeichereinrichtung (310) gespeicherten Inhalte $\begin{bmatrix} \begin{bmatrix} c_{0,0}, c_{0,1}, \cdots \end{bmatrix} \\ \cdots\cdots \\ \begin{bmatrix} c_{m-1,0}, c_{m-1,1}, \cdots \end{bmatrix} \end{bmatrix}$ , ($c = \varepsilon + j\phi$) sind, wobei jede Zeile einer Codewortsequenz eines Benutzers (Kanal) entspricht, d. h. *m* steht für die Anzahl von Benutzern (Kanälen); wobei jeder Datensatz einem Codewortdatensatz entspricht.

4. Mehrwegediversityempfangseinrichtung nach Anspruch 1, **dadurch gekennzeichnet, dass** das Modul zur Realisierung der *m x n* Korrelationsoperationsmatrix Matrizenoperationen zwischen *m x n* Matrizen vervollständigt, wobei gleichzeitig das Modul zur Realisierung der *m x N* Akkumulationsmatrix die Datenpufferfunktion des Zwischenergebnisses der Matrizenoperation verwirklicht.

5. Mobiles Endgerät eines CDMA-Systems, **dadurch gekennzeichnet, dass** es die Mehrwegediversityempfangseinrichtung nach einem der Ansprüche 1 bis 4 aufweist.

6. Mobiles Endgerät eines WCDMA-Systems, **dadurch gekennzeichnet, dass** es die Mehrwegediversityempfangseinrichtung nach einem der Ansprüche 1 bis 4 aufweist.

7. Mobiles Endgerät eines TDS-CDMA-Systems, **dadurch gekennzeichnet, dass** es die Mehrwegediversityempfangseinrichtung nach einem der Ansprüche 1 bis 4 aufweist.

**Revendications**

1. Appareil de réception de diversité multivoies pour des communications en accès multiple par répartition en code (AMRC) comprenant : un dispositif de quantification d'échantillon (110), un dispositif de stockage de données d'échantillon (300), un dispositif de stockage de données de code (310), un dispositif de gestion de ressources multivoies (350), un dispositif de gestion de ressources de code (320), un dispositif de contrôle de démodulation (340), un dispositif de démodulation de corrélation (330), une unité d'estimation de canal (370), un dispositif d'accumulation d'énergie (360), et un dispositif de traitement d'analyse d'énergie (380) ;

ledit dispositif de quantification d'échantillon (110) étant destiné à échantillonner et quantifier des signaux de réception pour les délivrer audit dispositif de stockage de données d'échantillon (300) ;

ledit dispositif de stockage de données d'échantillon (300) étant destiné à stocker tous les signaux d'échantillon pour les délivrer audit dispositif de démodulation de corrélation (330) sous le contrôle dudit dispositif de contrôle de démodulation (340) ;

ledit dispositif de stockage de données de code (310) étant destiné à stocker toutes les données de code pour les délivrer audit dispositif de démodulation de corrélation (330) sous le contrôle dudit dispositif de contrôle de démodulation (340) ;

ledit dispositif de gestion de ressources multivoies (350) étant destiné à recevoir le résultat délivré par ledit dispositif de traitement d'analyse d'énergie (380) pour générer une agrégation de démodulation multivoies, et à envoyer les informations de phase multivoies audit dispositif de contrôle de démodulation (340), et à envoyer les informations de code correspondantes audit dispositif de gestion de ressources de code (320) ;

ledit dispositif de gestion de ressources de code (320) étant destiné à générer des données de mot de code en fonction des informations de code envoyées par ledit dispositif de gestion de ressources multivoies (350) pour les délivrer audit dispositif de stockage de données de code (310) ;

ledit dispositif de contrôle de démodulation (340) étant destiné à générer les adresses lues dudit dispositif de stockage de données d'échantillon (300) et dudit dispositif de stockage de données de code (310) en fonction des informations de phase multivoies délivrées par ledit dispositif de gestion de ressources multivoies (350), et à contrôler l'opération de démodulation dudit dispositif de démodulation de corrélation (330) ;

ledit dispositif de démodulation de corrélation (330) étant destiné à accomplir l'opération de toute la démodulation multivoies selon la commande dudit dispositif de contrôle de démodulation (340), à délivrer le résultat de démodulation multivoies à ladite unité d'estimation de canal (370), et à délivrer le résultat de démodulation multivoies relevant de la boucle de recherche multivoies et à verrouillage de retard de phase audit dispositif d'accumulation d'énergie (360) ;

ladite unité d'estimation de canal (370) étant destinée à estimer les données de démodulation multivoies délivrées par ledit dispositif de démodulation de corrélation (330) ;

ledit dispositif d'accumulation d'énergie (360) étant destiné à effectuer une accumulation d'énergie des données multivoies délivrées par ledit dispositif de démodulation de corrélation (330), et à délivrer un résultat d'accumulation audit dispositif de traitement d'analyse d'énergie (380) ;

ledit dispositif de traitement d'analyse d'énergie (380) étant destiné à sélectionner la multivoie ayant la plus forte énergie parmi les multivoies relevant de la recherche multivoies, et à évaluer si la phase a glissé et le sens du glissement par rapport à la phase multivoies correspondant à la boucle à verrouillage de retard de phase, et à envoyer ces informations audit dispositif de gestion de ressources multivoies (350),

**caractérisé en ce que** ledit dispositif de démodulation de corrélation (330) comprend un module destiné à réaliser une matrice d'opération de corrélation $m \times n$ et un module destiné à réaliser une matrice d'accumulation $m \times N$, lesquelles sont séquentiellement liées, où ledit module destiné à réaliser une matrice d'opération de corrélation $m \times n$ est utilisé pour accomplir une opération de démodulation de corrélation entre $n$ données d'échantillon de chaque multivoie et ses $n$ données de mot de code correspondantes pour $m$ multivoies dans une période d'horloge ;

ledit module destiné à réaliser une matrice d'accumulation $m \times N$ est utilisé pour achever le processus d'accumulation de $m$ résultats d'une opération de corrélation parallèle de phase multivoies pour N périodes ; et le nombre de multivoies que chaque ligne de la matrice peut supporter est N, lequel est égal à n fois le nombre de périodes d'horloge dans un seule puce, où $N$ est le nombre de colonnes de la matrice d'accumulation.

2. Appareil de réception de diversité multivoies selon la revendication 1, **caractérisé en ce que** les contenus mémorisés dans ledit dispositif de stockage de données d'échantillon (300) sont $\begin{bmatrix} \begin{bmatrix} d_{0,0}, d_{0,1}, \cdots \end{bmatrix} \\ \cdots\cdots \\ \begin{bmatrix} d_{n-1,0}, d_{n-1,1}, \cdots \end{bmatrix} \end{bmatrix}$, $(d = \alpha + j\beta)$, où chaque ligne est mise en correspondance avec une séquence d'entrée d'antennes, c'est-à-dire que $n$ représente le nombre d'antennes ; chaque donnée est mise en correspondance avec une donnée d'échantillon.

3. Appareil de réception de diversité multivoies selon la revendication 1, **caractérisé en ce que** les contenus mémorisés dans ledit dispositif de stockage de données de code (310) sont $\begin{bmatrix} \begin{bmatrix} c_{0,0}, c_{0,1}, \cdots \end{bmatrix} \\ \cdots\cdots \\ \begin{bmatrix} c_{m-1,0}, c_{m-1,1}, \cdots \end{bmatrix} \end{bmatrix}$, $(c = \varepsilon + j\phi)$ où chaque ligne est mise en correspondance avec une séquence de mot de code d'un utilisateur (d'un canal), c'est-à-dire que $m$

représente le nombre d'utilisateurs (de canaux) ; chaque donnée est mise en correspondance avec une donnée de mot de code.

4. Appareil de réception de diversité multivoies selon la revendication 1, **caractérisé en ce que** ledit module destiné à réaliser une matrice d'opération de corrélation $m$ x $n$ accomplit des opérations de matrice entre des matrices $m$ x $n$, au moment où ledit module destiné à réaliser une matrice d'accumulation $m$ x $N$ réalise la fonction de mise en mémoire tampon du résultat intermédiaire de l'opération de matrice.

5. Terminal mobile de système AMRC, **caractérisé par** le fait de comprendre l'appareil de réception de diversité multivoies selon l'une quelconque des revendications 1 à 4.

6. Terminal mobile de système AMRC à bande large (WCDMA), **caractérisé par** le fait de comprendre l'appareil de réception de diversité multivoies selon l'une quelconque des revendications 1 à 4.

7. Terminal mobile de système AMRC à répartition dans le temps (TDS-CDMA), **caractérisé par** le fait de comprendre l'appareil de réception de diversité multivoies selon l'une quelconque des revendications 1 à 4.

fig. 1

fig. 2

fig. 3

Antenna
Sample Data

fig. 4

fig. 5

the number of Multipath Demodulation Supported
by Each Row Correlation Demodulation Matrix

| Multipath Phase 0 | ...... | Multipath Phase N-1 |
|---|---|---|
| Multipath Phase N | ...... | Multipath Phase 2N-1 |
| ...... | ...... | ...... |
| Multipath Phase N(m-1) | ...... | Multipath Phase Nm-1 |

the Number of the rows of Correlation Demodulation Matrix

## fig. 6

```
Multipath Demodulation,
Delay Phase Locked
Loop and Multipath
Search are decomposed
into An Aggregation
of Multipath Demodulation
```

Final Multipath Demodulation Phase is Selected by Multipath Assignment

Energy Analysis Processing selects the Multipath Phase with Largest Energy, and Judges Slip Direction of Multipath Demodulation Phase

listing Multipath Phase to form Matrix Table

Sending to Matrix Control Unit

extracting User Code Information in Multipath Aggregation

Sending to User Resource Management Unit

## fig .7

**EP 1 840 928 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1128565 A2